# EUROPEAN PATENT SPECIFICATION

(11) **EP 2 376 277 B1**
(45) Date of publication and mention of the grant of the patent: **22.11.2017**
(21) Application number: 08875459.3
(22) Date of filing: 15.12.2008
(51) Int. Cl.: B29D 99/00, B29L 31/60

(54) **SEMI-OPEN STRUCTURE WITH TUBULAR CELLS**
HALBOFFENE STRUKTUR MIT RÖHRENFÖRMIGEN ZELLEN
STRUCTURE SEMI-OUVERTE AVEC CELLULES TUBULAIRES

(43) Date of publication of application: 19.10.2011
(73) Proprietor: Telefonaktiebolaget LM Ericsson (publ), 164 83 Stockholm (SE)
(72) Inventor: NÄSSTRÖM, Kaj Tommy, Huddinge SE-141 72 (SE)
(74) Representative: Hedman, Anders
(86) International application number: PCT/EP2008/067560
(87) International publication number: WO 2010/069363

(56) References cited:
- WO-A-94/02311
- WO-A-97/03816
- JP-A- 2002 066 672

## Description

### TECHNICAL FIELD

The present invention relates to structures having a semi-open configuration with generally tubular open cells extending therethrough and being delimited by a sheet or plate material; such structures being generally referred to as honeycomb structures.

### BACKGROUND

Honeycomb structures are frequently used within several fields, such as in applications spanning from light and yet stiff impact and shock absorbing panels to sound and/or heat insulating panels and to EMC shielding and/or ventilation panels. In sandwich-type panels having one or several backing layers secured to each side of a honeycomb structure, the latter is normally referred to as a honeycomb core. Depending upon the application and/or the material of the honeycomb structure it is conventionally fabricated in one of two different processes. In the so called "expansion" or "stretching" process several flat sheets or foils are stacked on top of each other and are bonded to each other by a specific pattern of solder or adhesive lines provided between each pair of sheets. These lines are normally referred to as node lines. By applying pulling force in a direction perpendicular to the planes of the mutually bonded sheets they are stretched or expanded in the non-bonded areas, thereby forming a honeycomb cell pattern. An example of this "expansion" process is disclosed in US 2008/0145602 A1. In the "corrugation process" strips of corrugated or wavy material are put together so to say "back to back" and are bonded together by a suitable adhesive at generally flat contact surfaces. A general example of the "corrugation" process is disclosed in US 5,714,226. Depending upon the basic nature of the sheet material used the corrugated or wavy base material used in the "corrugation" process may be formed in many different ways, such as by a roll forming process, a drawing process or an extrusion process.

An issue that is common to both of the briefly described conventional honeycomb fabrication processes and that is rather vital in most applications is the strength of the obtained adhesive bond between the different sheets or strips at said node lines. Should such an adhesive bond between the sheets or strips fail this may cause the entire honeycomb structure to loose its properties or even to collapse.

For the field of electronics equipment the EMI/EMC shielding properties of metallic air vent structures of the honeycomb type are well documented. In such applications the mentioned "corrugation" fabrication process is very commonly used for producing electromagnetically shielding honeycomb air vent panels. Such applications require good and uniform electric conductivity throughout the panel to secure appropriate shielding. Bonding of the engaging parts of the metal strips by soldering is rather effective but is burdened with extremely high production as well as material costs that cannot be accepted for mass produced products. To solve this problem it has been suggested to use cheaper and more easily applied resin adhesives. The resulting panels have significantly reduced and not least irregular or unpredictable shielding capacity due to the fact that abutting faces of adjacent strips are electrically insulated from each other by the essentially nonconductive adhesive. Several attempts have been made to solve the shielding effectiveness problems by providing different kinds of conductivity bridges at the abutting bonded parts of the panels. Such attempts have involved plating of the entire honeycomb structure or alternatively mechanical displacement of material from one of the metal strips of the honeycomb and blending of said material over the adhesive bond and into the adjacent strip, as described in US 5,910,639.

JP 2002 066672 discloses a semi-open structure and a method according to the preamble of claims 1 and 4.

### SUMMARY

There is a general need for solutions enabling the production of appropriate honeycomb type structures for various applications and at reasonable cost. It is therefore a general object of the present invention to find a solution overcoming the above discussed problems and disadvantages of honeycomb type structures and their fabrication.

In particular it is an object of the invention to suggest an improved semi-open structure of the honeycomb type having improved stability and integrity and enabling cost efficient fabrication.

It is a further object of the invention to suggest an improved method of cost efficient fabrication of a semi-open structure of the honeycomb type
These and other objects are met by the invention as defined by the accompanying patent claims.

The invention relates to the type of semi-open structure that is generally referred to as a honeycomb structure. Specifically, it relates to such structures that are formed from sheet or plate material having corrugations extending across the material and defining open tubular cells. In order to improve the effectiveness of the fabrication and the stability of the structure a basic idea of the invention is to provide a structure wherein all of the tubular open cells are defined by foldable material of one integral sheet or plate folded onto or towards itself along folding lines that extend generally transversal to the corrugations. In this way, only one single continuous sheet/plate will be handled during fabrication, which is a clear improvement over the prior art processes that include handling and separate interconnection of a multitude of material strips. Additionally, the integral foldable material requires no separate interconnections, thereby significantly increasing the stability and integrity of the finished structure.

In accordance with a further aspect of the invention a method of fabricating an at least partially semi-open structure from sheet or plate material is suggested. The fabricated structure shall have adjoining, generally tubular open cells delimited by the sheet/plate material having a width, a length and a thickness and being corrugated or otherwise profiled in the direction of its width or length. Basically, the invention involves steps of providing an integral sheet/plate of foldable material and of alternatingly forming first and second sets of aligned slots in the sheet/plate in directions transversal to the corrugations. Furthermore, spacings are left between each of two aligned slots of each set and the slots of one of said first and second sets are displaced in the direction transversal to the corrugations in relation to the slots of the other set. The sheet/plate is then repeatedly folded towards or onto itself in alternating opposite directions along at least some of the sets of slots to thereby form sheet/plate sections that are interconnected in the areas of the spacings and that cooperate in delimiting the generally tubular cells.

Preferred further developments of the basic inventive idea as well as embodiments thereof are specified in the dependent subclaims.

Advantages offered by the present invention, in addition to those described above, will be readily appreciated when reading the below detailed description of embodiments of the invention.

### BRIEF DESCRIPTION OF THE DRAWINGS

The invention, together with further objects and advantages thereof, will be best understood by reference to the following description taken together with the accompanying drawings, in which:
- Fig. 1A: is a partly schematical plan view from above of a sheet material for forming a first embodiment of a semi-open structure of the invention;
- Fig. 1B: is an end view of the sheet material of Fig. 1A;
- Figs. 2A-B: illustrate, in side and end views, respectively, a first phase of the forming of the semi-open structure from the sheet material of Figs. 1A-B;
- Figs. 3A-B: illustrate, likewise in side and end views, respectively, a second phase of the forming of the semi-open structure from the sheet material of Figs. 1A-B;
- Figs. 4A-B: illustrate, likewise in side and end views, respectively, a third phase of the forming of the semi-open structure from the sheet material of Figs. 1A-B;
- Fig. 5: is an illustration of the completed first embodiment of a semi-open structure of the invention;
- Fig. 6: is a partial perspective view of the completed structure of Fig. 5;
- Fig. 7: is a partial section through the completed structure, along line A-A in Fig. 5;
- Fig. 8: is a block diagram illustrating the steps for fabricating the structure of Fig. 6;
- Fig. 9: is a partial illustration of a second embodiment of the structure of the invention;
- Fig. 10: is a partial illustration of a third embodiment of the structure of the invention;
- Fig. 11A: is a partly schematical plan view from above of a sheet material for forming a fourth embodiment of a semi-open structure of the invention;
- Fig. 11B: is a partial illustration of the fourth embodiment of the structure of the invention;
- Fig. 12: schematically illustrates an alternative corner formation of a fifth embodiment of the structure of the invention;
- Fig. 13A: is a partial illustration of a sheet material for forming a sixth embodiment of a semi-open structure of the invention;
- Fig. 13B: is a partial illustration of a finished sixth embodiment of the structure of the invention, as formed from the sheet material of Fig. 13A;
- Fig. 14A: is a partial plan view from above of a sheet material for forming a seventh embodiment of a semi-open structure of the invention;
- Fig. 14B: is a partial end view of the sheet material of Fig. 14A, for forming the seventh embodiment of the structure of the invention;
- Fig. 15A: is a schematical top plan view of a sheet material for forming an eighth embodiment of a structure according to the invention; and
- Fig. 15B: is a schematical perspective view of a finished eighth embodiment of the structure of the invention, as formed from the sheet material of Fig. 15A.

### DETAILED DESCRIPTION

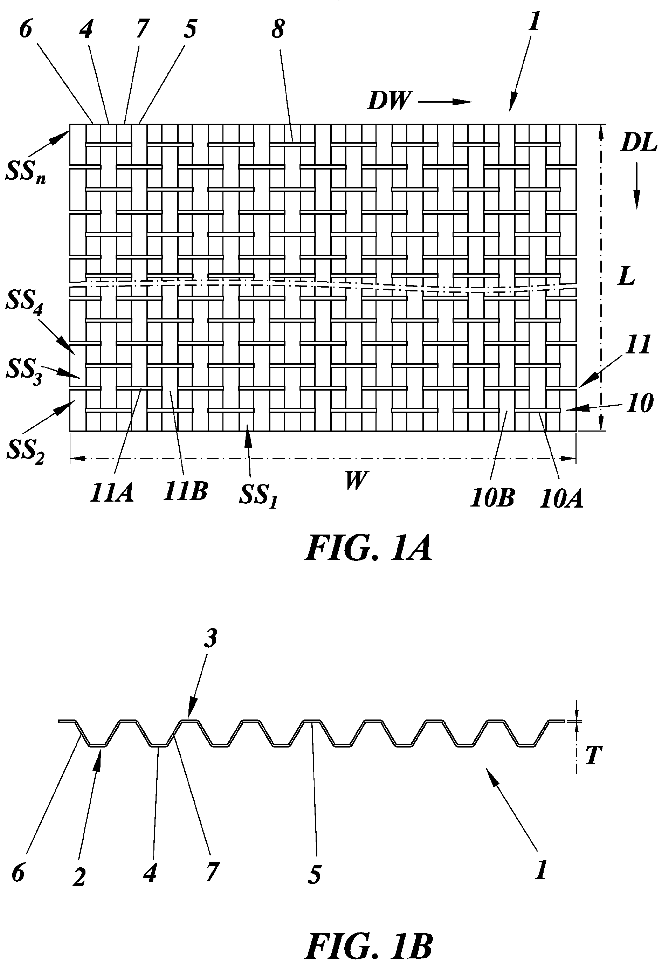

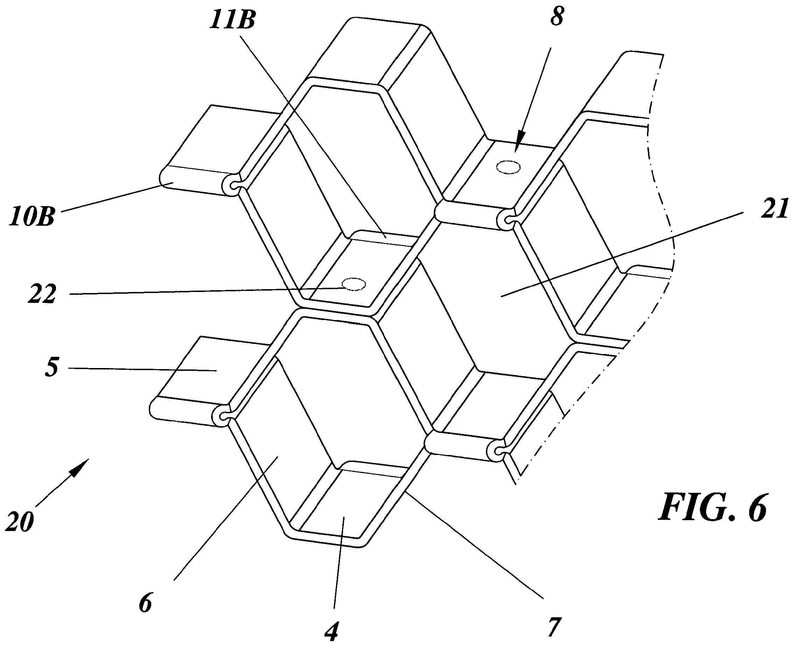

The invention will be explained with reference to exemplifying embodiments of the honeycomb type structure of the invention. Said embodiments are illustrated in the accompanying drawing figures. A first exemplifying embodiment of the invention and its fabrication is illustrated in Figs. 1A to 8, and relates to an application of the inventive solution for fabricating a partially and very schematically outlined panel extended in one single plane and intended for optional purposes and applications, including EMC-shielding, ventilation, insulation, deformation zones etc. It shall be emphasized, though that the illustrations are for the purpose of describing preferred embodiments of the invention and are not intended to limit the invention to the details thereof.

It has been recognized by the inventor that conventional honeycomb panels are rather expensive, whether fabricated by the initially mentioned "expansion" or "corrugation" processes. This is mainly due to the fact that both known processes involve several separated and time consuming process steps. In both cases the processes comprise the handling of separate sheets or plates that are then carefully aligned, stacked and bonded together. Subsequently, for forming the actual panels, they are processed either by expansion of the flat sheets or by cutting or sawing off slices from blocks of honeycomb structure. All this adds up to rather complicated and costly fabrication processes. In addition, the produced structures or panels often lack in stability. The lack of stability may be caused by cracking or other failure of the bonded joints and may have various serious consequences depending on the field of application.

Many attempts have been made in the past to improve the fabrication methods and/or the actual fabricated honeycomb panels in the respects mentioned above. Attempts relating to the "corrugation" process have mostly aimed at improving the strength of the bond and/or the electrical conductivity between the mutually bonded, corrugated strips. In spite of such efforts the conventional fabrication processes are still quite complex and time consuming. Likewise, the bonds between the separate panel parts do, in spite of the obtained improvements, still lack in quality as far as stability and/or conductivity is concerned. To overcome the above described disadvantages and problems with the known fabrication processes and honeycomb type panels, the present invention suggests a novel design approach. In accordance with the solution presented by the invention advantageous improvements are achieved in terms of a significantly reduced fabrication cost and an increased stability and/or conductivity of the entire honeycomb structure.

In addition, the versatility of the fabricated honeycomb panel structure is significantly increased by means of the invention. Basically, all of the advantageous effects of the invention are achieved by the unique honeycomb structure formed in one piece, from one single sheet or plate of corrugated foldable material that is folded onto or towards itself along folding lines in the material.

The invention will be explained below with reference to exemplifying embodiments thereof that are illustrated in the accompanying drawing figures 1 to 15B. In said drawing figures are disclosed very schematical embodiments of the inventive honeycomb structure and its fabrication. Like the conventional honeycomb structures the embodiments of the invention generally concern a semi-open structure having adjoining tubular cells and consisting of sheet or plate material delimiting each of the tubular cells and having spaced corrugations extending across the material.

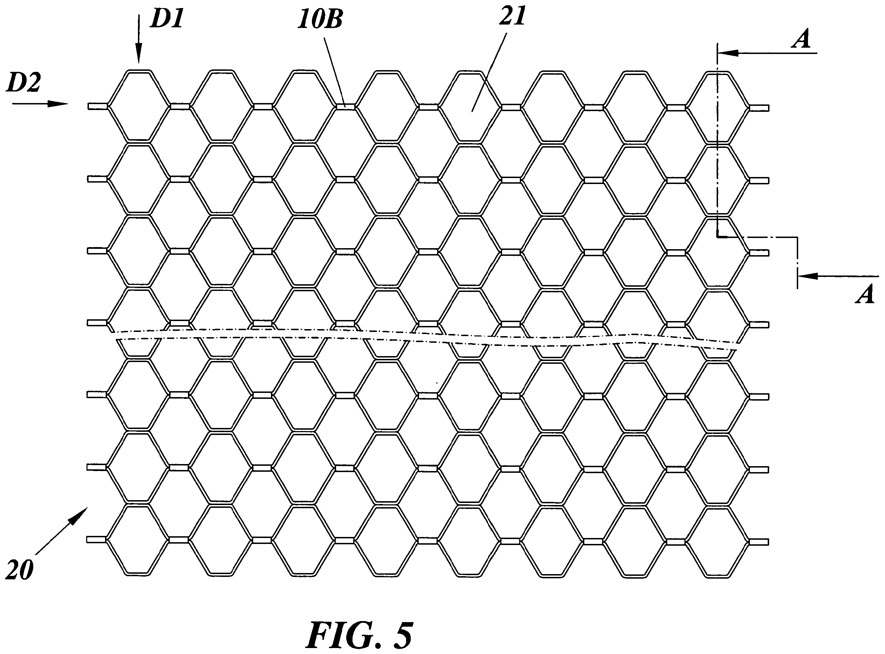

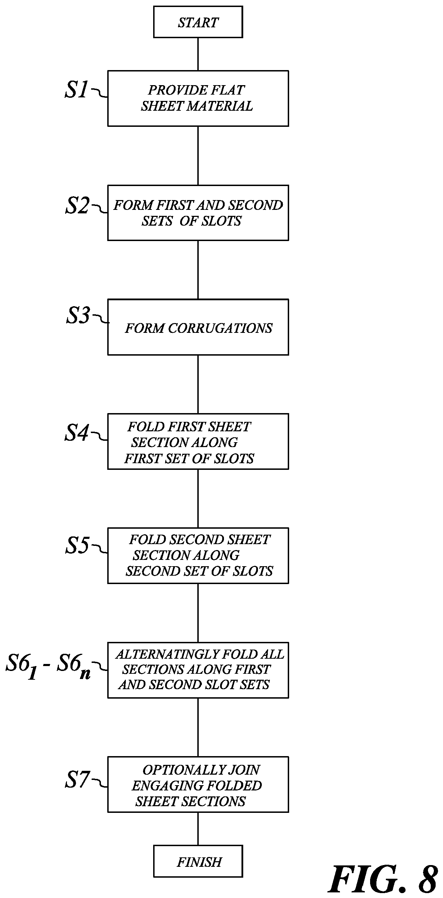

Figs. 1A-B disclose a schematical first exemplary embodiment of a basic material 1 from which a first embodiment of the inventive honeycomb structure 20 (see Fig. 5) may be formed in a sequence of method steps as illustrated in Fig. 8. Such a fabrication process is well suited for being executed as a programmable fabrication process. According to the invention the basic material 1 is in step S1 provided in the form of an integral sheet or plate material 1 having a width W, a length L and a thickness T. The basic sheet/plate material 1 shall be plastically foldable but may otherwise be optionally chosen for each application. It may, depending upon the specific application, range from a thin foil having a thickness T of only a few hundreds of a millimeter to a comparatively rigid plate having a thickness T of up to several millimeters. The sheet/plate 1 may consist of a metal, a synthetic resin or even composite materials. For simplification this base material will subsequently be referred to only as a sheet material.

In step S2, two sets 10, 11 of mutually spaced, aligned slots 10A, 11A are alternatingly formed at predetermined positions in the sheet material 1. Each set 10, 11 consists of slots 10A and 11A, respectively, extending in generally parallel directions DW across the width of the sheet 1. Said slot directions DW are generally transversal to subsequently formed, later described corrugations of the sheet 1 and are throughout the specification referred to as second directions. The individual slots 10A, 11A of each set 10 and 11, respectively, are spaced from each other by leaving slot spacings 10B, 11B between each of two adjacent, aligned slots 10A, 11A of each set 10, 11. The individual slots 10A, 11A of one of said sets 10, 11 also are displaced in the slot directions DW in relation to the individual slots of the other set, so that the slot spacings 10B, 11B of each set are likewise mutually displaced in the second direction DW. These sets of slots form the folding lines along which the sheet 1 is folded onto or towards itself, as will be described further below.

In step S3 the sheet material 1 is formed with multiple evenly spaced and generally parallel corrugations 2, 3 that for practical reasons are formed subsequent to the forming of the sets 10, 11 of slots 10A, 11A. The corrugations are here defined as alternating grooves 2 and ridges 3 formed in the sheet material 1. The corrugations 2, 3 are extended in generally parallel first directions DL along the length L of the sheet material 1. Said first directions are generally transversal or perpendicular to the second directions DW of the sets 10, 11 of slots 10A, 11A. It should be obvious that, depending upon the circumstances of a specific application, the corrugations 2, 3 may equally well be extended in directions DW across the width W of the material and the slots 10A, 11A may be aligned and extended in the directions DL along the length of the sheet material 1.

The corrugations 2, 3 are here formed having a generally trapezoidal shape with substantially flat groove bottom and ridge top surfaces 4 and 5, respectively, and with interconnecting, inclined side surfaces 6 and 7. In this exemplary first embodiment the sets 10, 11 of slots 10A, 11A are evenly spaced and distributed over the full extension of the sheet 1. The individual slots 10A, 11A are here formed having equal length, except for the outermost slots 11A of the set 11 of the sheet configuration of Fig. 1. The length of the slots 10A, 11A and of the slot spacings 10B, 11B is adapted to the dimensions of the corrugations 2, 3. Specifically the length of the slots 10A, 11A is equal to, and preferably slightly exceeds, the width of a corrugation groove 2 and corrugation ridge 3, respectively, as measured from the beginning of one inclined side surface 6 and 7, respectively, to the end of the next inclined side surface 7 and 6, respectively. The length of the slot spacings 10B, 11B is approximately equal to, and preferable slightly smaller than, the width of the groove bottom and ridge top surfaces 4 and 5, respectively. As was mentioned above, the slots 10A, 11A of one of the two sets 10, 11 are displaced in a direction transversal to the corrugations 2, 3 in relation to the individual slots of the other set. This displacement will likewise be selected in view of the described slot, spacing and corrugation dimensions, so that the slot spacings 10B, 11B will normally be centered on the respective flat groove bottom and ridge top surfaces 4 and 5, respectively. Expressed otherwise the slots 10A, 11A of the two sets 10, 11 are displaced with one corrugation pitch.

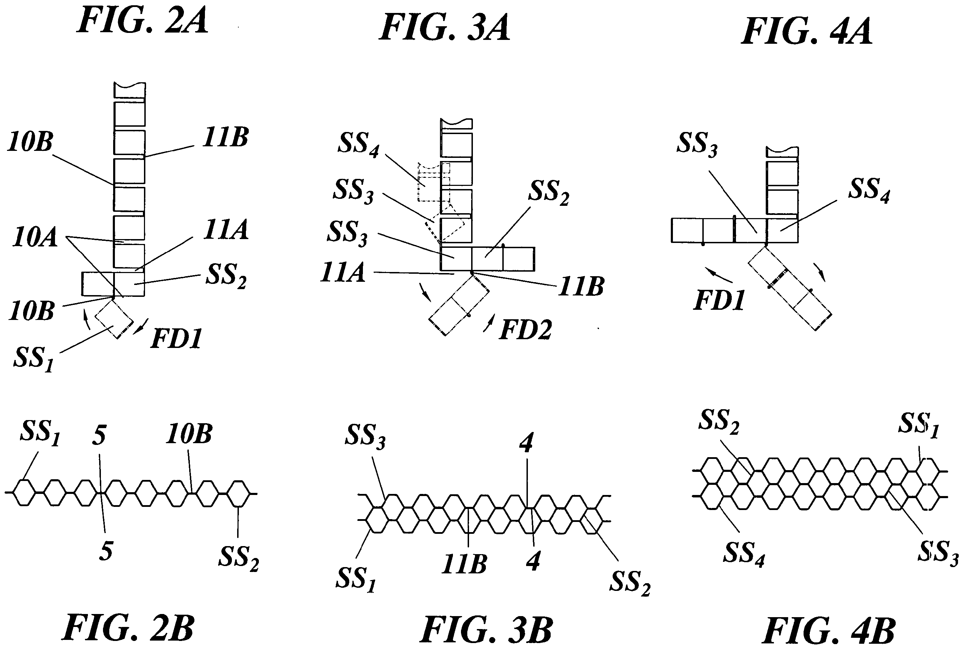

With this sheet configuration, the sets 10, 11 of slots 10A, 11A may be said to form weakening lines that in practice serve as the above mentioned folding lines when forming an inventive honeycomb structure 20 (as illustrated in Fig 5) in method steps S4 - S6ₙ of Fig. 8. In Figs. 2A-B is illustrated the initial step S4 for folding the sheet material 1 approximately 180° onto itself in a first folding direction FD1 along a first set 10 of slots 10A. Thereby a first sheet section SS₁ is formed in the integral sheet material 1. Through the 180° fold this first sheet section SS₁ will engage the next sheet section SS₂ at now opposing ridge top surfaces 5. The first and second sheet sections SS₁, SS₂ will still be joined at the actual fold by the slot spacings 10B. In Figs. 3A-B is illustrated the next method step S5 in which the sheet material 1 is again folded approximately 180° onto itself in a second, opposite folding direction FD2 along a second set 11 of slots 11A. In this case the second sheet section SS₂ will through the new, opposite 180° fold engage the next sheet section SS₃ at now opposing groove bottom surfaces 4 thereof. The second and third sheet sections SS₂, SS₃ will still be joined at the actual fold by the slot spacings 11B. In the subsequent steps S6₁ - S6ₙ the sheet material 1 is repeatedly folded onto itself in the alternating opposite directions FD1, FD2 along successive first and second sets 10, 11 of slots, respectively. Thereby further sheet sections SS₃ - SSₙ are folded in the similar manner. This is exemplified in Fig. 4A-B by the folding of the third sheet section SS₃. These further sheet sections SS₃-SSₙ and the above described sheet sections SS₁-SS₂ cooperate in delimiting all of the tubular, open cells 21 of the structure 20 illustrated in greater detail in Figs. 5-7. In Figs. 2A-B to 4A-B the folding process has been illustrated mainly for the purpose of explaining the principles thereof. It should be clear that in practice the sheet will most likely be folded without swinging along the previously folded sections 180° for each new fold. In practical applications this folding may for instance be performed by folding two subsequent sheet sections simultaneously, in the opposite direction, as indicated with dash-dot lines for the sheet sections SS₃ and SS₄ in Fig. 3A.

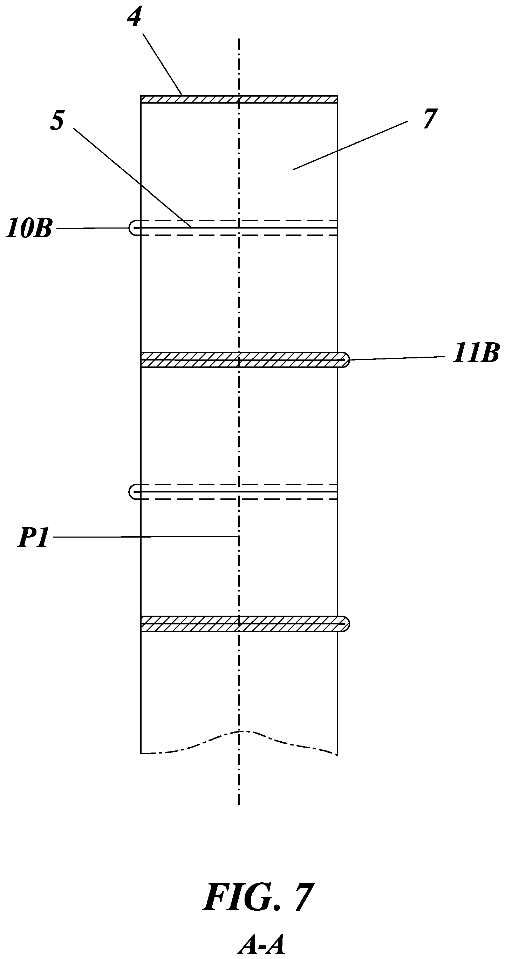

In this first embodiment the sheet material 1 is folded by approximately 180° onto itself at all of the sets 10, 11 of slots. Thereby a flat structure 20 or panel is formed that is extended in one plane P1 (see Fig. 7) and with the cells 21 directed generally normal to said plane. The cells 21 are evenly distributed in the structure 20 and form rows extended in each of two mutually perpendicular directions D1, D2. The sheet sections SS₁-SSₙ are mutually interconnected in the areas of said slot spacings 10B, 11B that in the completed structure 20 will be positioned on opposite sides of the panel. In certain applications a particularly high degree of stability and integrity may be required. For such applications at least some adjoining sheet sections SS₁-SSₙ that are partially interconnected through slot spacings 10B, 11B may be additionally secured to each other. In such cases, at least some mutually engaging areas 8 thereof that are distant from an interconnecting slot spacing 10B, 11B may be bonded to each other. This may be done in step S7, subsequent to the folding, but may in practical fabrication methods preferably be more conveniently made after each fold. Such additional bonding 22 may be performed in different ways depending upon the nature of the sheet material 1, such as by adhesive bonding, spot welding or brazing.

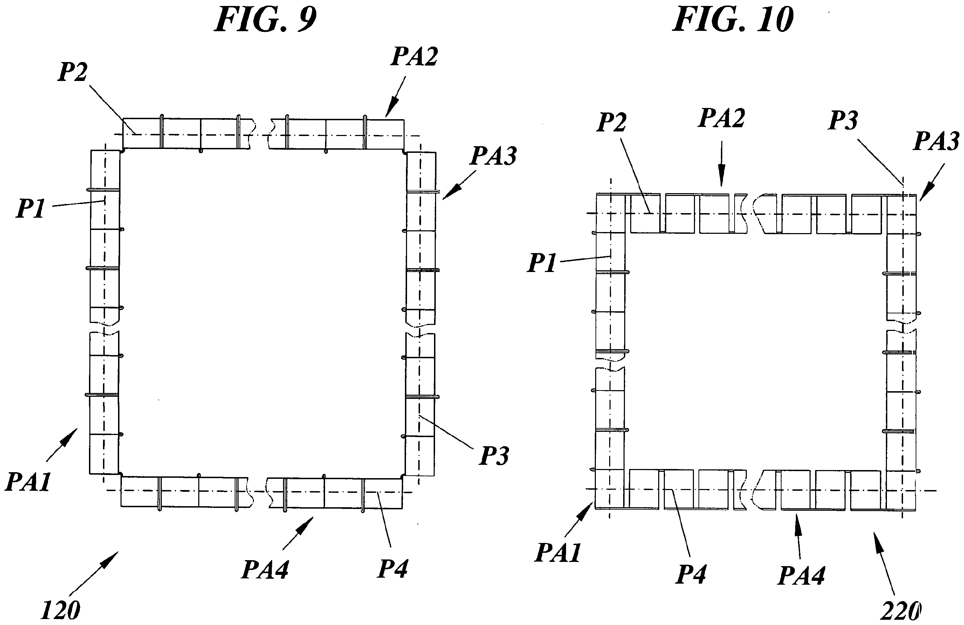

In order to emphasize the versatility of the honeycomb structure of the invention as well as of the fabrication method for forming it, several variations of the described first embodiment will now be described with reference to Figs. 9-15B.

In Fig. 9 is illustrated a second embodiment of a structure 120 according to the invention. This structure 120 is likewise formed from a sheet material 1 as illustrated in Figs. 1A-B, having sets of slots distributed over the entire sheet 1. Here, the sheet material is likewise folded at each set of slots. However, at selected sets of slots the sheet material is folded at an angle other than 180°, thereby forming a structure 120 divided into panel areas PA1-PA4 extended in multiple different planes P1-P4. In the illustrated, second embodiment the sheet material is folded 90° towards itself along the selected sets of slots, thereby forming a right angled "cage"-structure. Such a structure 120 may be used e.g. in a sub-rack for electronic equipment. In other embodiments the sheet material may naturally be folded towards itself at other angles than 180° or 90° along the selected sets of slots, such as between 0° and 135° (see Figs. 10, 11B and 12). The sheet material is folded 180° onto itself at all of the other sets of slots, so that the cells in all of the panel areas PA1-PA4 are directed generally normal to the respective plane P1-P4.

In Fig 10 is illustrated a third embodiment of the structure 220 according to the invention. This embodiment is a variation of the second embodiment of Fig. 9, and may likewise be formed from a sheet material 1 as illustrated in Figs. 1A-B. The sheet material is likewise folded by 180° and in alternate opposite directions along selected successive sets of slots. This folding of the sheet material onto itself forms panel areas PA1, PA3 of the described configuration having cells that are directed generally normal to the respective plane P1, P3. Between said "folded" panel areas PA1, PA3 are formed panel areas PA2, PA4 that are extended in planes P2, P4 and where the sheet material is folded by 0°, i.e. remains unfolded (throughout the specification this expression is used to indicate that the sheet is not folded). In the latter panel areas PA2, PA4 the structure thereby remains in its slotted and corrugated form.

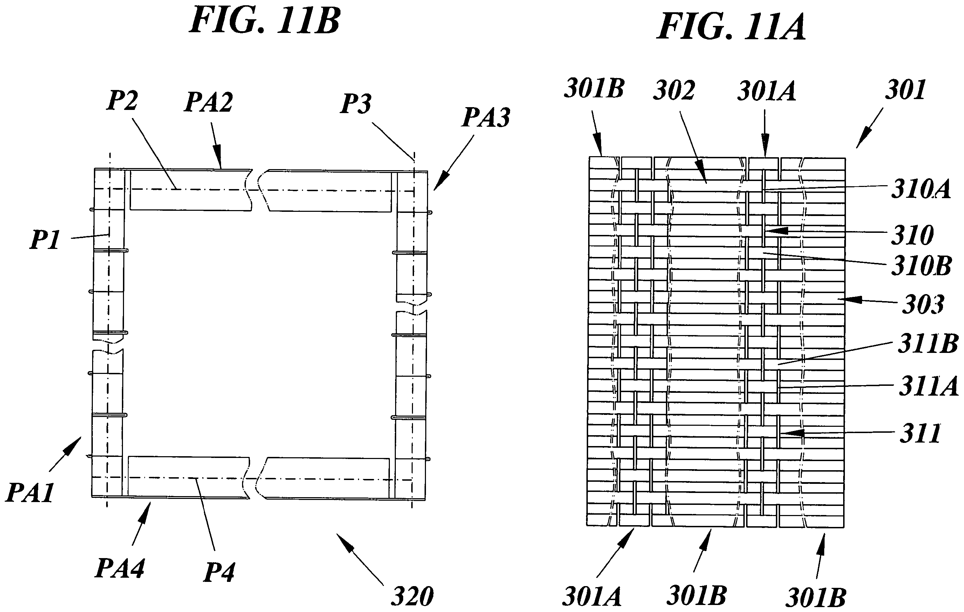

In Fig 11A is illustrated a modified sheet material 301 wherein the sets 310, 311 of slots 310A, 311A are alternatingly formed and are equally spaced from each other. However, in this case the sets 310, 311 of slots 310A, 311A are only formed in selected areas 301A of the sheet material 301, whereas "unslotted" areas 301B are formed between successive slotted areas 301A. This means that the corrugations 302, 303 are extended continuous or uninterrupted in said "unslotted" areas 301B of the sheet material 301. For forming a fourth embodiment of the structure 320 of the invention, the sheet material 301 is then folded in the general manner described with reference to Fig. 10. Specifically, the sheet material 301 is folded by 180° towards itself along successive sets of slots to form panel areas PA1, PA3 having cells that are directed generally normal to their respective plane P1, P3. Between said "folded" panel areas PA1, PA3 are formed panel areas PA2, PA4 that are extended in planes P2, P4. In the latter panel areas PA2, PA4 the sheet material is in its corrugated form, without slots and with the corrugations 302, 303 extended in the direction of the respective plane P2, P4 of the panel areas PA2 and PA4.

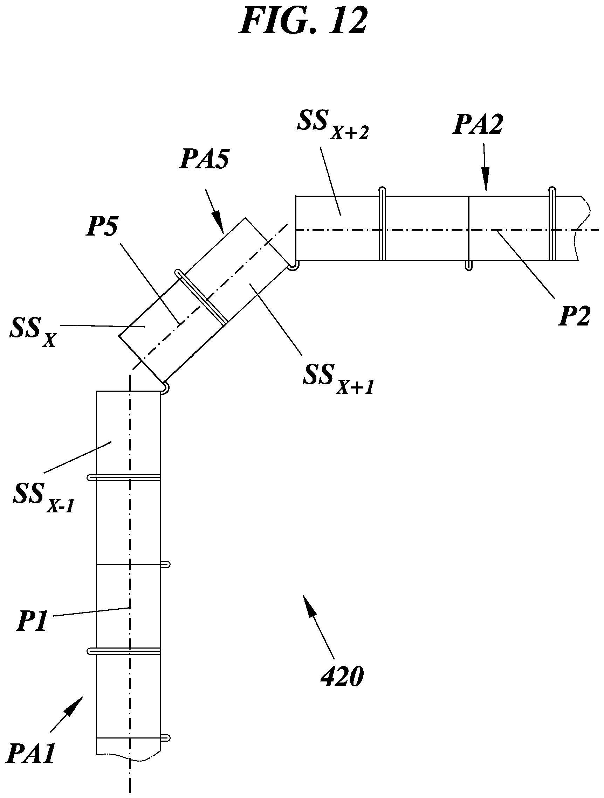

Fig. 12 is a partial illustration of a fifth embodiment of an inventive structure 420. This embodiment exemplifies the variation that was mentioned in connection with Fig. 9 and that concerns the folding angle at the sets of slots forming the corners of a "cage"-type structure 420. A corner panel area PA5 extended in a plane P5 is formed connecting generally perpendicular panel areas PA1 and PA2 extending in planes P1, P2. The corner panel area PA5 has two sheet sections SS_{X} and SS_{X+1} that are folded 180° onto each other but that are folded by approximately 135° towards the adjoining sheet sections SS_{X-1}, SS_{X+2} of the panel areas PA1, PA2. By varying the folding angles at the corner panel areas and by varying the number of sheet sections making up the corner panel areas, it will be possible to form structures of various polygonal configurations.

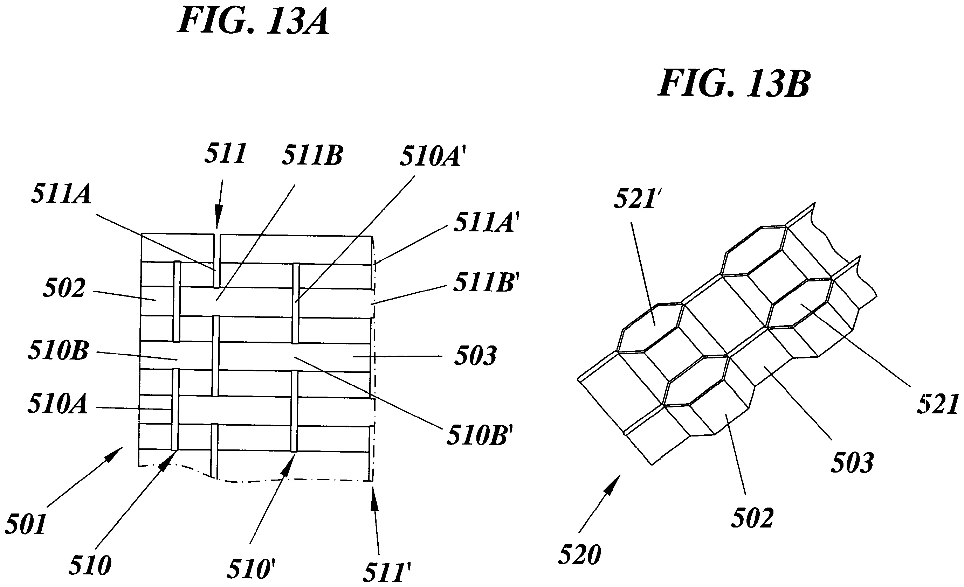

In Fig. 13A is shown a cutout from a further variation of a sheet material 501 that may be used for forming a sixth embodiment of a structure 520 (Fig. 13B) of the invention. In this embodiment the sheet material 501 is formed having corrugations 502, 503 as before, but having first 510, 510' and second 511, 511' sets of slots 510A, 510A' and 511A, 511A', respectively that are positioned at different distances from each other. Specifically, a primary first set 510 of slots 510A is formed at a relatively short distance from a primary second set 511 of slots 511A, whereas a secondary first set 510' of slots 510A' is formed at a significantly larger distance from the primary second set 511 of slots 511A as well as from a secondary second set 511' of slots 511A'. With such a configuration of the sheet material, the above described alternate folding will produce a honeycomb structure 520 having tubular open cells 521, 521' of unequal depth. By varying the distances between sets of slots, structures of different topography may be fabricated, for instance for conforming to the surface of a component to be cooled etc.

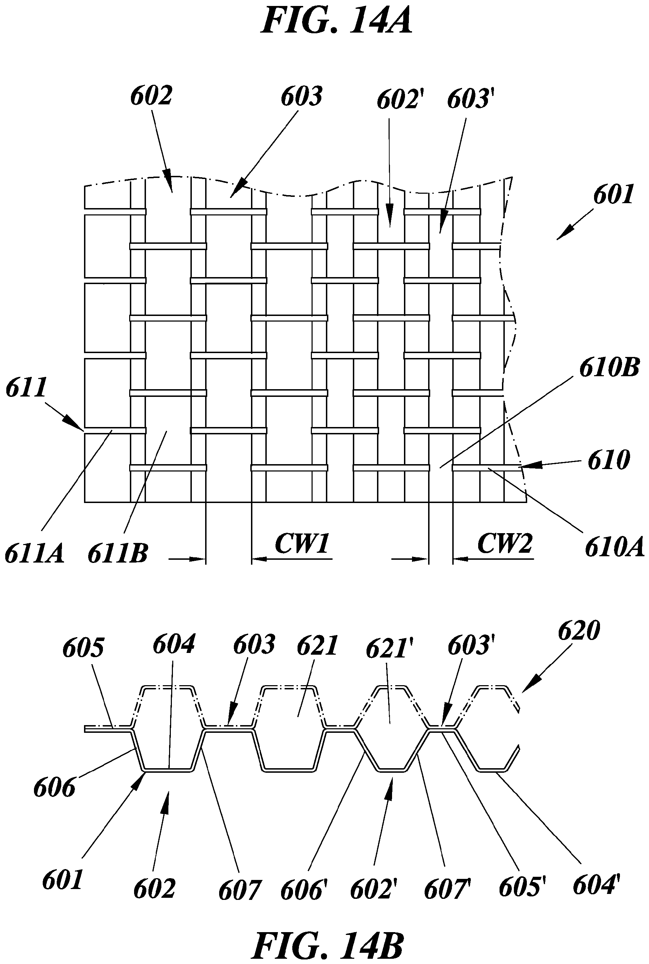

Fig. 14A illustrates a further variation of a sheet material 601 for forming a seventh embodiment of a honeycomb structure 620 (schematically indicated in Fig. 14B) according to the invention. Here, the corrugations 602, 602', 603, 603' are formed having flat groove bottom 604, 604' and ridge top 605, 605' surfaces, respectively, of two different widths CW1 and CW2. With such a configuration is formed a structure 620 having parallel open tubular cells 621, 621' of different dimensions, e.g. to suit specific applications. In the illustrated embodiment the inclination of the side surfaces 606, 607 and 606', 607' of the different corrugations 602, 602', 603, 603' are adapted to the width of the flat groove bottom and ridge top surfaces 604, 604' and 605, 605', respectively, so that the slots have equal length for all corrugations. However, for other corrugation width variations of similar embodiments the slot lengths and slot spacings may be adapted to different corrugation widths to ensure that the slot spacings substantially correspond to the flat groove bottom and ridge top surfaces.

In a particularly advantageous application of the invention the fabricated semi-open structure is intended specifically for electromechanically shielding and ventilation purposes within the field of electronic equipment. While the open cells of the structure serve as ventilation channels of a ventilation panel unit, the integral or continuous sheet material delimiting the cells serves as an electromagnetically (EMC) shielding panel for an electronic module. In such an application the basic material is a metal sheet having good electric conductivity.

For such use the best electromagnetic shielding properties are obtained when the corrugations have generally flat groove bottom and ridge top portions that in the folded condition engage and make flat contact with each other. Since these contact surfaces are also integrally connected to each other through the slot spacings the electrical conductivity is good and uniform across the entire inventive honeycomb panel. To maximize the conductivity it is preferred that the width of the slot spacings essentially corresponds to the width of the associated groove bottom and ridge top portions. To enhance the general stability of the panel or structure even further sheet sections may also be spot-welded together at positions distant from the slot spacings, as mentioned above.

For such electronic applications the structure and its EMC-shielding properties may be adapted to specific electronic equipment and the prevailing conditions. This may be done by adapting the sheet material thickness (normally 0,2 - 0,3 mm for EMC- shielding purposes), the cross-sectional dimensions as well as the depth of the tubular cells to the radio frequencies to be shielded, so that the EMC characteristics are optimized for specific applications. Similar adaptations may be made also to structures that additionally or instead serve ventilation purposes.

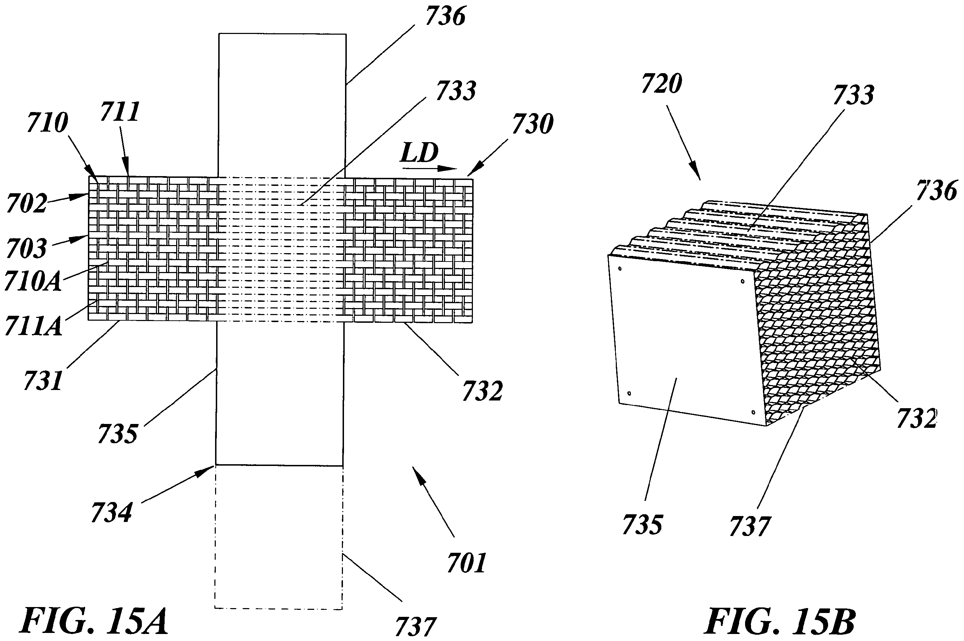

Finally, Figs. 15A-B illustrate a further embodiment of the sheet material 701 as well as of a partial honeycomb structure 720 according to the invention. This structure may preferably but not exclusively be used for accommodating PCB's with excellent ventilation as well as EMC-shielding in a sub-rack for use e.g. within the telecommunications industry. The basic sheet material 701 for forming the structure 720 has a general cross-shape that is formed e.g. by cutting out right-angled pieces at each corner of a square or rectangular sheet. The material is formed with first and second sets 710, 711 of slots 710A, 711A. The sets of slots are formed on the outer ends of the transverse piece 730 of the cross, as viewed in Fig. 15A. Specifically, the slots are formed only on the parts 731, 732 of the transverse piece 730 that extend outwardly from the upright post 734 of the cross shape. The slots are all extended substantially perpendicular to the longitudinal direction LD of the transverse piece 730.

The sheet material 701 is then corrugated at least on parts thereof. Specifically, the transverse piece 730 is, like in the previous embodiments, formed with corrugations 702, 703 extending along the length of the transverse piece 730. The corrugations are only required or even desirable on the specified outer parts 731, 732 of the transverse piece 730, but for practical processing reasons the central part 733 thereof will likewise be corrugated as indicated with dash-dot lines in Fig. 15A. The outer parts 731, 732 of the transverse piece 730 are then alternatingly folded, as described above, along the sets 710, 711 of slots 710A, 711A. This will produce flat honeycomb-type panels from said outer parts 731, 732 of the transverse piece 730. The outer parts 731, 732 of the transverse piece 730 and the corresponding unslotted and unfolded outer parts 735, 736 of the upright post 734 are then folded in the same general direction towards the central part 733. This will produce the cage- or box-type structure 720 of Fig. 15B, having two parallel, opposing honeycomb walls 731, 732, two parallel, opposing flat sheet walls 735, 736, one corrugated or flat wall 733 and one open side that faces downwardly in the illustration in Fig. 15B. It will also be possible to create a fully closed cage or box by adding a further flat sheet part 737 as a downward (as viewed in Fig. 15A) continuation of the upright post 734 of the cross shape. This continuation is connected to the outer part 735 and would be folded 90° in relation to the latter, thereby forming the final wall 737 of the cage or box 720.

One example of a variation of the fabrication method is where the partially slotted sheet material 301 of Fig. 11A is used for forming a "flat" panel resembling the one of the first embodiment. By folding such a sheet by 90° at the respective first "corner slots" of Fig. 11B and by 180 ° at all other sets of slots the panel will be divided into several parallel panel areas. First panel areas are formed that are extended in one plane and that have cells directed generally normal to the plane of said areas. Second "unslotted" panel areas are also formed that are extended in a parallel but slightly displaced plane and that have the originally corrugated shape. Likewise, in the third embodiment of Fig 10, the third panel area could be extended in the same plane as the first panel area and the second and fourth panel areas could be extended in a parallel but slightly displaced plane. In this case the evenly slotted sheet would simply also be folded by 90° at the respective first "corner slots" so that the panel would be "flat" and extended in two parallel planes, but with the displaced areas thereof having the originally corrugated and slotted shape.

Another example thereof is the use of cross-sectional forms or shapes for the corrugations other than the generally trapezoidal form illustrated in the accompanying drawings. Examples of such alternative forms are ranging from right-angular to semi-circular and generally arc-shaped or any other appropriate cross-sections. For applications requiring good contact between sheet sections, whether for electrical conductivity or for general stability purposes, the corrugations may have flattened bottom and top portions. In other advantageous alternative embodiments the corrugations may have stepwise or gradually varying dimensions along their longitudinal extension.

The length of the slots as well as of the slot spacings may also be varied both within each set and between the different sets of slots, as was briefly mentioned in association with the embodiment of Figs. 14A-B. The same applies also to the mutual displacement between the different sets of slots, which does not have to be regular or related absolutely to the corrugation pitch.

It shall be emphasized that expressions such as "groove", "ridge", "top" and "bottom" surface that are used throughout this specification to specify the sheet material and its corrugations, all relate to the accompanying illustrations and the positioning of the sheet material therein. It should therefore be clear that these expressions are not to be regarded as restricting the invention as claimed. The invention has been described in connection with what is presently considered the most practical and preferred embodiments, but the invention is intended to cover various modifications and equivalent arrangements included within the scope of the appended claims.

## Claims

1. An at least partially semi-open structure (20; 120; 220; 320; 420; 520; 620; 720) having adjoining, generally tubular open cells (21; 521, 521'; 621, 621'), and consisting of sheet material delimiting the tubular open cells, having a width (W), a length (L) and a thickness (T), having multiple spaced corrugations (2, 3; 302; 303; 502, 503; 602, 603, 602', 603'; 702, 703) extending in generally parallel first directions (DL or DW) across at least parts of the sheet material, all of the tubular open cells of the structure being delimited by foldable sheet material of one integral sheet (1; 301; 501; 601; 701) folded onto or towards itself along folding lines (10, 11; 310, 311; 510, 511, 510', 511'; 610, 611; 710, 711) extending at predetermined positions in the sheet material and in second directions (DW or DL) being generally transversal to the corrugations and having=alternating sets (10, 11; 310, 311; 510, 511, 510', 511'; 610, 611; 710, 711) of mutually spaced slots (10A, 11A; 310A, 311A; 510A, 11A, 510A', 511A'; 610A, 611A; 710A, 711A) extending in the second, generally parallel directions (DW or DL) across the sheet (1; 301; 501; 601; 701); individual slots of every second set being displaced in the direction transversal to the corrugations in relation to the individual slots of the other set; and=folds in alternate opposite directions (FD1, FD2) along adjacent sets of slots defining the folding lines;
**characterized by** folds of an angle other than 180', preferably between 0° and 135° so that the sheet (1; 301; 701) is folded towards itself along selected sets (10, 11; 310, 311; 710, 711) of slots (10A, 11A; 310A, 311A; 710A, 711A), and folds of approximately 180° so that the sheet (1; 301; 701) is folded onto itself at some or alternatively all of the other sets of slots, whereby the structure (120; 220; 320; 420; 720) is divided into panel areas (PA1-PA4; PA1, PA2, PA5; 731-733, 735-737) extended in multiple different planes (P1-P4; P1, P2, P5) and with cells (21) directed generally normal to the respective plane of at least some of said areas.

2. A structure (220; 320; 720) according to claim 1, **characterized in that** sets (310, 311; 710, 711) of slots (310A, 311A; 710A, 711A) are present in selected areas (301A; 731, 732) of the sheet (301; 701) or **in that** the sheet (1) is alternatively left unfolded at some sets (10, 11) of slots (10A, 11A), whereby the structure (220; 320; 720) is divided into at least one panel area (PA1, PA3; 731, 732) extended in one plane (P1, P3) and having cells (21) directed generally normal to the plane of said area and into at least one area (PA2, PA4; 733) extended in one plane (P2, P4) and having the originally corrugated or alternatively the originally corrugated and slotted shape.

3. A structure (20; 120; 220; 320; 420; 520; 620; 720) according to claims 1 or 2, **characterized in that** the sheet (1; 301; 501; 601; 701) consists of electrically conductive metal material.

4. A method of producing an at least partially semi-open structure (20; 120; 220; 320; 420; 520; 620; 720) from a sheet material, said structure having adjoining, generally tubular cells (21; 521, 521'; 621, 621') delimited by said sheet material that has a width (W), a length (L) and a thickness (T), wherein an integral sheet (1; 301; 501; 601; 701) of foldable material is provided and at least parts of the sheet material is corrugated (corrugations 2, 3; 302; 303; 502, 503; 602, 603, 602', 603'; 702, 703) or otherwise profiled in the direction (DW or DL) of its width or length, whereby:
first sets (10; 310; 510, 510'; 610; 710) of aligned slots (10A; 310A; 510A, 510A', 610A; 710A) are formed in the sheet; in a direction transversal to the corrugations (2, 3; 302; 303; 502, 503; 602, 603, 602', 603'; 702, 703), second sets (11; 311; 511, 511'; 611; 711) of aligned slots (11A; 311A; 511A, 511A'; 611A; 711A) are formed in the sheet, likewise in a direction transversal to the corrugations, thereby leaving sheet slot spacings (10B, 11B; 310B; 311B; 510B, 511B, 510B', 511B'; 610B, 611B) between each of two aligned slots of each set; the first and second sets of slots are formed alternatingly in the sheet material; the individual slots of one of said first and second sets are formed displaced in the direction transversal to the corrugations in relation to the individual slots of the other set; and the sheet is repeatedly folded in alternating opposite directions (FD1, FD2) towards or onto itself, along at least some of the aligned sets of slots, thereby forming sheet sections (SS₁-SSₙ; SSₓ₋₁-SSₓ₊₂) that are mutually interconnected in the areas of said slot spacings and that cooperate in delimiting the generally tubular cells;
**characterized by** folding the sheet material (1; 301; 701) at an angle other than 180', preferably between 0° and 135°, towards itself along selected sets (10, 11; 310, 311; 710, 711) of slots (10A, 11A; 310A, 311A; 710A, 711A), and by folding the sheet by 180° onto itself at some or alternatively all of the other sets of slots, thereby forming a structure (120; 220; 320; 420; 720) divided into panel areas (PA1-PA4; PA1, PA2, PA5; 731-733, 735-737) extended in multiple different planes (P1-P4; P1, P2, P5) and with cells (21) directed generally normal to the respective plane of at least some of said areas.

5. A method according to claim 4, **characterized by** providing said sets (310, 311; 710, 711) of slots (310A, 311A; 710A, 711A) only in selected areas (301A; 731, 732) of the sheet material (301; 701) or by alternatively leaving the sheet material (1) unfolded at some of said sets (10, 11) of slots (10A, 11A), thereby forming a structure (320; 220; 720) divided into at least one panel area (PA1, PA3; 731, 732) extended in one plane (P1, P3) and having cells (21) directed generally normal to the plane of said area and into at least one area (PA2, PA4; 733) extended in one plane (P1, P2, P4) and having the originally corrugated or alternatively the originally corrugated and slotted shape.

## Patentansprüche

1. Zumindest teilweise halboffene Struktur (20; 120; 220; 320; 420; 520; 620; 720) mit benachbarten, im Allgemeinen röhrenförmigen offenen Zellen (21; 521, 521'; 621, 621') und bestehend aus Plattenmaterial, das die röhrenförmigen offenen Zellen begrenzt, mit einer Breite (W), einer Länge (L) und einer Dicke (T), mit mehreren beabstandeten Riffelungen (2, 3; 302; 303; 502, 503; 602, 603, 602', 603'; 702, 703), die in im Allgemeinen parallelen ersten Richtungen (DL oder DW) über zumindest Teile des Plattenmaterials verlaufen, wobei alle der röhrenförmigen offenen Zellen der Struktur durch faltbares Plattenmaterial von einer integrierten Platte (1; 301; 501; 601; 701) begrenzt sind, die auf oder in Richtung von sich selbst entlang Faltlinien (10, 11; 310, 311; 510, 511, 510', 511'; 610, 611; 710, 711), verlaufend an vorgegebenen Positionen in dem Plattenmaterial, gefaltet ist, und in zweiten Richtungen (DW oder DL) verlaufen, die im Allgemeinen quer zu den Riffelungen sind und abwechselnde Sätze (10, 11; 310, 311; 510, 511, 510', 511'; 610, 611; 710, 711) von zueinander beabstandeten Schlitzen (10A, 11A; 310A, 311A; 510A, 511A, 510A', 511A'; 610A, 611A; 710A, 711A) haben, die in den zweiten, im Allgemeinen parallelen Richtungen (DW oder DL) über die Platte (1; 301; 501; 601; 701) verlaufen; wobei einzelne Schlitze von jedem zweiten Satz in der Richtung quer zu den Riffelungen in Bezug auf die einzelnen Schlitze des anderen Satzes versetzt sind; und Falzen in abwechselnden entgegengesetzten Richtungen (FD1, FD2) entlang benachbarter Sätze von Schlitzen, die die Faltlinien definieren;
**gekennzeichnet durch** Falze mit einem Winkel ungleich 180°, bevorzugt zwischen 0° und 135°, sodass die Platte (1; 301; 701) in Richtung von sich selbst entlang gewählter Sätze (10, 11; 310, 311; 710, 711) von Schlitzen (10A, 11A; 310A, 311A; 710A, 711A) gefaltet ist, und Falze von etwa 180°, sodass die Platte (1; 301; 701) auf sich selbst an einigen oder alternativ allen der anderen Sätze von Schlitzen gefaltet ist, wodurch die Struktur (120; 220; 320; 420; 720) in Flächenbereiche (PA1-PA4; PA1, PA2, PA5; 731-733, 735-737), die in mehreren unterschiedlichen Ebenen (P1-P4; P1, P2, P5) verlaufen, und mit Zellen (21), die im Allgemeinen normal zu der entsprechenden Ebene von zumindest einigen der Bereiche gerichtet sind, unterteilt ist.

2. Struktur (220; 320; 720) nach Anspruch 1, **dadurch gekennzeichnet, dass** Sätze (310, 311; 710, 711) von Schlitzen (310A, 311A; 710A, 711A) in gewählten Bereichen (301A; 731, 732) der Platte (301; 701) vorhanden sind oder dass die Platte (1) alternativ bei einigen Sätzen (10, 11) von Schlitzen (10A, 11A) ungefaltet bleibt, wobei die Struktur (220; 320; 720) in zumindest einen Flächenbereich (PA1, PA3; 731, 732), der in einer Ebene (P1, P3) verläuft und der Zellen (21) hat, die im Allgemeinen normal zu der Ebene von dem Bereich gerichtet sind, und in zumindest einen Bereich (PA2, PA4; 733), der in einer Ebene (P2, P4) verläuft und der die ursprünglich geriffelte oder alternativ die ursprünglich geriffelte und geschlitzte Form hat, unterteilt ist.

3. Struktur (20; 120; 220; 320; 420; 520; 620; 720) nach Anspruch 1 oder 2, **dadurch gekennzeichnet, dass** die Platte (1; 301; 501; 601; 701) aus elektrisch leitendem Metallmaterial besteht.

4. Verfahren zum Herstellen einer zumindest teilweise halboffenen Struktur (20; 120; 220; 320; 420; 520; 620; 720) aus einem Plattenmaterial, wobei die Struktur benachbarte, im Allgemeinen röhrenförmige Zellen (21; 521, 521', 621, 621') hat, die durch das Plattenmaterial, das eine Breite (W), eine Länge (L) und eine Dicke (T) hat, begrenzt ist, wobei eine integrierte Platte (1; 301; 501; 601; 701) aus faltbarem Material bereitgestellt ist und zumindest Teile des Plattenmaterials geriffelt sind (Riffelungen 2, 3; 302; 303; 502, 503; 602, 603, 602', 603'; 702, 703) oder anderweitig in den Richtungen (DW oder DL) ihrer Breite oder Länge profiliert sind, wobei:
erste Sätze (10; 310; 510, 510'; 610; 710) von ausgerichteten Schlitzen (10A; 310A; 510A, 510A', 610A; 710A) in der Platte gebildet sind; in einer Richtung quer zu den Riffelungen (2, 3; 302; 303; 502, 503; 602, 603, 602', 603'; 702, 703), zweite Sätze (11; 311; 511, 511', 611; 711) von ausgerichteten Schlitzen (11A; 311A; 511A, 511A'; 611A; 711A) in der Platte gebildet sind, ebenfalls in einer Richtung quer zu den Riffelungen, wodurch Plattenschlitzabstände (10B, 11B; 310B; 311B; 510B, 511B, 510B', 511B'; 610B, 611B) zwischen jedem von zwei ausgerichteten Schlitzen von jedem Satz belassen werden; wobei der erste und der zweite Satz von Schlitzen abwechselnd in dem Plattenmaterial gebildet sind; wobei die einzelnen Schlitze von einem des ersten und zweiten Satzes in der Richtung quer zu den Riffelungen in Bezug auf die einzelnen Schlitze des anderen Satzes versetzt gebildet sind; und wobei die Platte wiederholt in abwechselnd entgegengesetzten Richtungen (FD1, FD2) in Richtung von oder auf sich selbst gefaltet ist, entlang von zumindest einigen der ausgerichteten Sätze von Schlitzen, wodurch Plattenabschnitte (SS₁-SSₙ; SSₓ₋₁-SSₓ₊₂), die in den Bereichen der Schlitzabstände miteinander verbunden sind und die durch Begrenzen der im Allgemeinen röhrenförmigen Zellen zusammenwirken, gebildet werden;
**gekennzeichnet durch** Falten des Plattenmaterials (1; 301; 701) in einem Winkel ungleich 180°, bevorzugt zwischen 0° und 135°, in Richtung von sich selbst entlang von gewählten Sätzen (10, 11; 310, 311; 710, 711) von Schlitzen (10A, 11A; 310A, 311A; 710A, 711A) und durch Falten der Platten um 180° auf sich selbst an einigen oder alternativ allen der anderen Sätze von Schlitzen, wodurch eine Struktur (120; 220; 320; 420; 720) gebildet wird, die in Flächenbereiche (PA1-PA4; PA1, PA2, PA5; 731-733, 735-737), die in mehreren unterschiedlichen Ebenen (P1-P4; P1, P2, P5) verlaufen und mit Zellen (21), die im Allgemeinen normal zu der entsprechenden Ebene von zumindest einigen der Bereiche gerichtet sind, unterteilt ist.

5. Verfahren nach Anspruch 4, **gekennzeichnet durch** Bereitstellen der Sätze (310, 311; 710, 711) von Schlitzen (310A, 311A; 710A, 711A) nur in gewählten Bereichen (301A; 731, 732) des Plattenmaterials (301; 701) oder alternativ durch Belassen des Plattenmaterials (1) als ungefaltet an einigen der Sätze (10, 11) von Schlitzen (10A, 11A), wodurch eine Struktur (320; 220; 720) gebildet wird, die in zumindest einen Flächenbereich (PA1, PA3; 731, 732), der in einer Ebene (P1, P3) verläuft und der Zellen (21) hat, die im Allgemeinen normal zu der Ebene von dem Bereich gerichtet sind, und in zumindest einen Bereich (PA2, PA4; 733), der in einer Ebene (P1, P2, P4) verläuft und der die ursprünglich geriffelte oder alternativ die ursprünglich geriffelte und geschlitzte Form hat, unterteilt ist.

## Revendications

1. Structure au moins partiellement semi-ouverte (20 ; 120 ; 220 ; 320 ; 420 ; 520 ; 620 ; 720) ayant des cellules ouvertes généralement tubulaires contiguës (21 ; 521, 521' ; 621, 621'), et constituée d'une feuille de matériau délimitant les cellules ouvertes tubulaires, ayant une largeur (W), une longueur (L) et une épaisseur (T), ayant de multiples ondulations espacées (2, 3 ; 302 ; 303 ; 502, 503 ; 602, 603, 602', 603' ; 702, 703) s'étendant dans des premières directions généralement parallèles (DL ou DW) à travers au moins des parties de la feuille de matériau, la totalité des cellules ouvertes tubulaires de la structure étant délimitée par une feuille de matériau pliable d'une feuille d'une seule pièce (1 ; 301 ; 501 ; 601 ; 701) pliée sur ou vers elle-même le long de lignes de pliure (10, 11 ; 310, 311 ; 510, 511, 510', 511' ; 610, 611 ; 710, 711) s'étendant à des positions prédéterminées dans la feuille de matériau et dans des secondes directions (DW ou DL) généralement transversales aux ondulations et ayant des ensembles alternés (10, 11 ; 310, 311 ; 510, 511, 510', 511' ; 610, 611 ; 710, 711) de fentes mutuellement espacées (10A, 11A ; 310A, 311A ; 510A, 511A, 510A', 511A' ; 610A, 611A ; 710A, 711A) s'étendant dans les secondes directions généralement parallèles (DW ou DL) à travers la feuille (1 ; 301 ; 501 ; 601 ; 701) ; des fentes individuelles d'un ensemble sur deux étant déplacées dans la direction transversale aux ondulations par rapport aux fentes individuelles de l'autre ensemble ; et des plis dans des directions opposées alternées (FD1, FD2) le long d'ensembles adjacents de fentes définissant les lignes de pliures ; **caractérisée par** des plis d'un angle autre que 180°, de préférence entre 0° et 135° de sorte que la feuille (1 ; 301 ; 701) soit pliée vers elle-même le long d'ensembles sélectionnés (10, 11 ; 310, 311 ; 710, 711) de fentes (10A, 11A ; 310A, 311A ; 710A, 711A), et des plis d'approximativement 180° de sorte que la feuille (1 ; 301 ; 701) soit pliée sur elle-même au niveau de certains ou en variante de tous les autres ensembles de fentes, moyennant quoi la structure (120 ; 220 ; 320 ; 420 ; 720) est divisée en zones de panneau (PA1 à PA4 ; PA1, PA2, PA5 ; 731 à 733, 735 à 737) étendues dans de multiples plans différents (P1 à P4 ; P1, P2, P5) et avec des cellules (21) dirigées généralement normales au plan respectif d'au moins certaines desdites zones.

2. Structure (220 ; 320 ; 720) selon la revendication 1, **caractérisée en ce que** des ensembles (310, 311 ; 710, 711) de fentes (310A, 311A ; 710A, 711A) sont présents dans des zones sélectionnées (301A ; 731, 732) de la feuille (301 ; 701) ou **en ce que** la feuille (1) est en variante laissée dépliée au niveau de certains ensembles (10, 11) de fentes (10A, 11A), moyennant quoi la structure (220 ; 320 ; 720) est divisée en au moins une zone de panneau (PA1, PA3 ; 731, 732) étendue dans un plan (P1, P3) et ayant des cellules (21) dirigées généralement normales au plan de ladite zone et dans au moins une zone (PA2, PA4 ; 733) étendue dans un plan (P2, P4) et ayant la forme ondulée d'origine ou en variante la forme ondulée et fendue d'origine.

3. Structure (20 ; 120 ; 220 ; 320 ; 420 ; 520 ; 620 ; 720) selon les revendications 1 ou 2, **caractérisée en ce que** la feuille (1 ; 301 ; 501 ; 601 ; 701) est constituée d'un matériau métallique électriquement conducteur.

4. Procédé de production d'une structure au moins partiellement semi-ouverte (20 ; 120 ; 220 ; 320 ; 420 ; 520 ; 620 ; 720) à partir d'une feuille de matériau, ladite structure ayant des cellules tubulaires généralement contiguës (21 ; 521, 521' ; 621, 621') délimitées par ladite feuille de matériau qui a une largeur (W), une longueur (L) et une épaisseur (T), dans lequel une feuille d'une seule pièce (1 ; 301 ; 501 ; 601 ; 701) de matériau pliable est prévue et au moins des parties de la feuille de matériau sont ondulées (ondulations 2, 3 ; 302 ; 303 ; 502, 503 ; 602, 603, 602', 603' ; 702, 703) ou sinon profilées dans la direction (DW ou DL) de sa largeur ou longueur, moyennant quoi :
des premiers ensembles (10 ; 310 ; 510, 510' ; 610 ; 710) de fentes alignées (10A ; 310A ; 510A, 510A', 610A ; 710A) sont formés dans la feuille ; dans une direction transversale aux ondulations (2, 3 ; 302 ; 303 ; 502, 503 ; 602, 603, 602', 603' ; 702, 703), des seconds ensembles (11 ; 311 ; 511, 511' ; 611 ; 711) de fentes alignées (11A ; 311A ; 511A, 511A' ; 611A ; 711A) sont formés dans la feuille, de même dans une direction transversale aux ondulations, laissant ainsi des espacements de fentes de feuille (10B, 11B ; 310B ; 311B ; 510B, 511B, 510B', 511B' ; 610B, 611B) entre chacune de deux fentes alignées de chaque ensemble ; les premier et second ensembles de fentes sont formés de façon alternée dans la feuille de matériau ; les fentes individuelles de l'un desdits premier et second ensembles sont formées déplacées dans la direction transversale aux ondulations par rapport aux fentes individuelles de l'autre ensemble ; et la feuille est pliée de façon répétée dans des directions opposées alternées (FD1, FD2) vers ou sur elle-même, le long d'au moins certains des ensembles alignés de fentes, formant ainsi des sections de feuille (SS₁ à SSₙ ; SSₓ₋₁ à SSₓ₊₂) qui sont mutuellement reliées dans les zones desdits espacements de fentes et qui coopèrent pour délimiter les cellules généralement tubulaires ;
**caractérisé par** le pliage de la feuille de matériau (1 ; 301 ; 701) à un angle autre que 180°, de préférence entre 0° et 135°, vers elle-même le long d'ensembles sélectionnés (10, 11 ; 310, 311 ; 710, 711) de fentes (10A, 11A ; 310A, 311A ; 710A, 711A), et par le pliage de la feuille de 180° sur elle-même au niveau de certains ou en variante de tous les autres ensembles de fentes, formant ainsi une structure (120 ; 220 ; 320 ; 420 ; 720) divisée en zones de panneau (PA1 à PA4 ; PA1, PA2, PA5 ; 731 à 733, 735 à 737) étendues dans de multiples plans différents (P1 à P4 ; P1, P2, P5) et avec des cellules (21) dirigées généralement normales au plan respectif d'au moins certaines desdites zones.

5. Procédé selon la revendication 4, **caractérisé par** la fourniture desdits ensembles (310, 311 ; 710, 711) de fentes (310A, 311A ; 710A, 711A) uniquement dans des zones sélectionnées (301A ; 731, 732) de la feuille de matériau (301 ; 701) ou en variante par le fait de laisser la feuille de matériau (1) dépliée au niveau de certains desdits ensembles (10, 11) de fentes (10A, 11A), formant ainsi une structure (320 ; 220 ; 720) divisée en au moins une zone de panneau (PA1, PA3 ; 731, 732) étendue dans un plan (P1, P3) et ayant des cellules (21) dirigées généralement normales au plan de ladite zone et en au moins une zone (PA2, PA4 ; 733) étendue dans un plan (P1, P2, P4) et ayant la forme ondulée d'origine ou en variante la forme ondulée et fendue d'origine.
